# EUROPEAN PATENT APPLICATION

(11) **EP 4 145 372 A1**
(43) Date of publication of application: **08.03.2023**
(21) Application number: 21194324.6
(22) Date of filing: 01.09.2021
(51) Int. Cl.: G06Q 30/02

(54) **A METHOD OF DELIVERY OF INFORMATION AT A WEB-CONFERENCE ENVIRONMENT**

(71) Applicant: Intellex Ike, 10676 Athens (GR)
(72) Inventor:
(74) Representative: Kouzelis, Dimitrios

(57) **Abstract**

A method of delivery of information from a provider to at least one user via an invitation link at a web-conference environment is disclosed, such method including steps of activation of the invitation link by the at least one user, delivery of information to the at least one user in at least one predefined time interval.

## Description

### FIELD

The present disclosure concerns advertising, and in particular online advertising at a web-conference environment.
Further, the present disclosure concerns a method of automatically delivering advertisements for entities or individuals interested in promoting products or services.

### BACKGROUND

The majority of web sites in the Internet world wide web, display advertisements in a frequent basis. Advertisers invest significant amounts for displaying a specific advertisement in web pages, focusing on directing the viewer to the specific product or service that is advertised. It can be thus understood that the available space and time for placing the advertisement is of significant importance for most entities to promote their products or services. It would be thus beneficiary to any content provider, such as advertisers, to have the possibility of presenting their products or services in any available online space through a method of delivery of information that will maximize ad revenue without impairing the users experience. Further, it has been identified that the consumers are increasingly ignoring or blocking advertisements, thus limiting their effectiveness for advertisers. For that reason, targeted advertising is preferred since it is focused on certain characteristics of the consumers, while at the same time it is beneficiary for the consumers since instead of seeing irrelevant products, they get something they are interested in, at least in theory.

It is commonly known in the art such advertisements to appear as a video or audio stream or as text or pictures, before or during the display of a video in a web site, or in banners within a web page. However, it has been noticed that if a user is invited to participate in a web-conference, and he decides to enter the web-conference platform in a time period, for example, prior of the initiation of the web-conference or after its ending, no information is displayed at all. The waiting space of the user/participant is thus empty without any substantial benefit either for the user pe se or for any other 3^{rd} party. There is thus a lot of space and time for any delivery of information, including but not limited to advertisement, in a currently unexploited field.

There is thus the need to provide a method of delivery of information at a web-conference environment that will take advantage of any available space and timing to provide the users or the participants with information, either targeted or random, thus promoting effectively any related product or service submitted by various individuals or entities.

### SUMMARY

In embodiments, a method of delivery of information from a provider to at least one user via an invitation link at a web-conference environment is provided, comprising the steps of activation of the invitation link by the at least one user, delivery of information to the at least one user wherein the delivery of information is performed in at least one predefined time interval.

In embodiments, the at least one predefined time interval is before the initiation or after the ending of a web-conference.

In embodiments, the method of delivery of information comprises the step of identification of the personalized profile, associated with the at least one user.

In embodiments, the delivery of information is targeted to the at least one user based on the identification of the personalized profile.

In embodiments, the delivery of targeted information comprises web advertisements.

In embodiments, the method of delivery of information comprises the step of identifying the current location of the at least one user.

In embodiments the targeted information comprises delivery of localized advertising to the at least one user, based on the identified current location of the at least one user.

In embodiments, the method of delivery of information comprises the step of identifying the characteristics of the at least one user, the characteristics being gender and age.

In embodiments, the characteristics of the at least user may be job title and educational level.

In embodiments, the targeted information comprises web advertisement, based on the identified characteristics.

In embodiments, the delivery of information to the at least one user automatically stops in a predetermined time.

In embodiments, the predetermined time may be approximately the initiation of the web-conference.

In embodiments, the at least one user may comprise a plurality of users wherein interaction is allowed between the plurality of users.

In embodiments, the interaction may be performed through voice activated means.

In embodiments, the delivery of information to the at least user may comprise streaming video and/or text.

### BRIEF DESCRIPTION OF THE DRAWINGS

The disclosure can be better understood by reading the detailed description of various embodiments given as non-limiting examples. The description refers to an accompanying sheet of figures, in which:

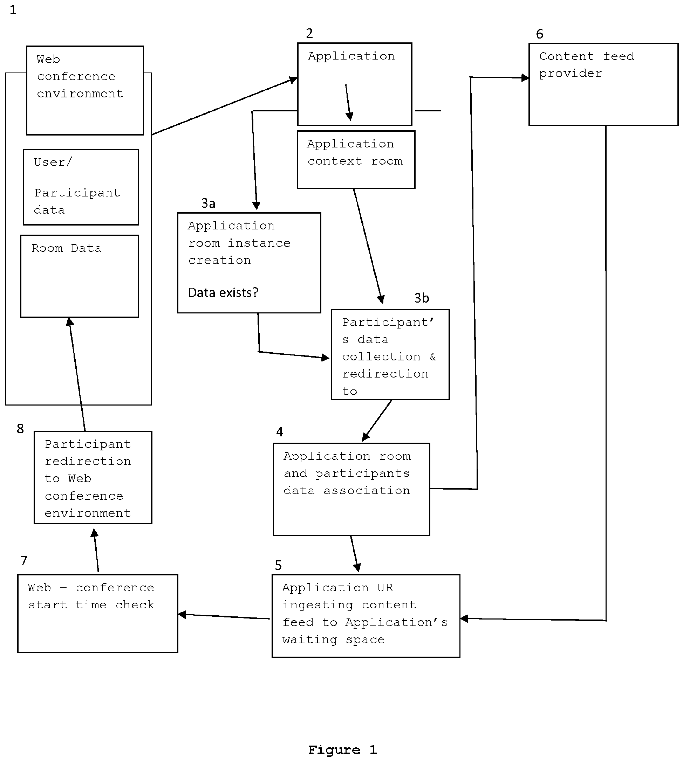

FIG. 1 illustrates an example of the method in a block diagram.

### DETAILED DESCRIPTION

An embodiment of the method according to aspects of the disclosure will now be described with reference to Figure 1, wherein like numerals represent like parts. Although the method is described with reference to specific examples, it should be understood that modifications and changes may be made to these examples without going beyond the general scope as defined by the claims. Individual characteristics of the various embodiments shown and/or mentioned herein may be combined in additional embodiments. Consequently, the description and the drawing should be considered in a sense that is illustrative rather than restrictive. The figure depicts illustrative aspects and is not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

According to an embodiment of the present disclosure a method of delivery of information at a web conference environment is provided. Such environment may comprise a room (box 1) provided by any known suitable venues that allow any web-conference type such as online meetings, presentations or conferences. Well known publicly available venues may be Zoom, Skype, Microsoft teams, etc. Embodiments may be practiced using other venues, such as provided by Google and the like, without departing from the scope of the embodiments claimed. Such venues have the benefit of allowing the participation of multiple users or participants depending on the type of the web-conference. For example, an inter-departmental online meeting of an entity may comprise a few participants, such as but not limited to two, three or four, etc., while a scientific conference for example, may require the participation of hundreds of viewers/participants. Moreover, as the remote working is becoming more and more common and the number of people using such venues and the opportunity to organize web-conferences through them is exploded. As a consequence and since online advertising is an established and effective way of promoting any information to an audience, the advertisers would appreciate a method of delivery of information at a web-conference environment as a powerful way to advertise their products or services, thus enhancing the possibilities of maximizing their revenue.

In embodiments, the room may also comprise data of the participants (box 2 of Figure 1) at the web-conference which may be provided as input by the host of the web conference. It is commonly known in the art that in order to participate in a web-conference of any type, an invitation link is sent to the registered personal email of any participant/user that requires an activation that will provide access to said web-conference. The registered email may provide information about standard user attributes, such as but not limited to city and country, web sessions, etc. However, the access to the web-conference may also be allowed through the provision of individual username and password to the participants/user, as sent to their registered email.

The method of delivery of information in a preferred embodiment according to the present disclosure may be initiated upon the activation of the invitation link by the at least one user/ participant of the web-conference. The term "information" it shall be understood to comprise any data content that can be displayed to the user, such as web advertisements, either related to the topic of the web-conference or not. The web advertisements may comprise any suitable type such as streaming video, text, banners, etc. Such types of web advertisements may direct the at least one user to specific products or services, thus impacting the purchasing behavior of the at least one user and provide at the same time an additional source of income to the entity or individual that provides advertisement content. Further, upon activation of the invitation link, the method of delivery of information may be continued through directing the at least one user to an external application that will carry out the method of delivery of information. However, the method of delivery of information may also be performed with the same advantageous effects within the waiting space of the venue (without thus directing the user to an external application), upon agreement for example, with the owner of the venue that is also the owner of the waiting space of the at least one user. In a further step, the owner of the web conference environment venue may transmit through a secure communication protocol, for example through Hypertext Transfer Protocol Secure (HTTPS) that ensures encrypted communication, the room data and the participants data to that external application.

In that stage, with systems and programming languages well known in the art, such as but not limited to PHP, Java, Python, a data control may be carried out to identify if the previously described room and participant data are already in the application's database. In case the room data exists (see boxes 3, 3b), then the participant's data are added, and the method of delivery of information will continue to the next steps. In case that the room and participant's data are new, then they are considered as new resources and the application automatically creates a new instance of application wherein the variables of the room and participants data are collected (see box 3, 3a). In both cases previously described, the operations are performed in the background in a relatively fast amount of time without any intervention of the participant/user.

Further, the method of delivery of information may be performed in a predefined time interval. In detail, such predefined time interval may be defined as a period before the initiation of a web-conference. It has been noticed that upon activation of the invitation link, the users are directed to an empty space, simply waiting for the initiation of any web-conference type, such as business meeting or presentation or conference of any type. With the method of delivery of information of the present disclosure, content feed providers (box 6) are capable of taking advantage of that "dead" time intervals and promote their products or services either through random advertisements or through targeted advertising as it will described later in this disclosure. A "content feed provider" may be a person or entity that has the right in the content of an information. Further, a content feed provider may be an entity or a 3^{rd} party that have the rights to display and/or reproduce the information publicly.

In other examples, the delivery of information may be performed in another predefined time interval such as after the ending of a web-conference. In detail, upon ending of the web-conference by the user/participant that is the host of the web-conference, the at least one user may be provided with information, such as advertisements for a specific amount of time, such as 2-4 minutes after the ending of the web-conference.

In other examples, the method of delivery of information comprises the step of identifying the personalized profile associated with the at least one user (see box 3b, 4). Such operation may be carried out by obtaining various sets of attributes/characteristics of the at least one user, for example with commonly available search engines or through cookies that are locally stored in the Personal Computer or the laptop of the at least one user. The identification and consequently the collection of the personalized data of the at least one user are immediately sent through secure communication protocols, for example Hypertext transfer protocol (HTTPS), to any contracted content feed provider (box 6) who may be an advertiser, job searchers, scientific web-sites etc.). Relevant distribution of information is thus delivered through display to the user by matching each Uniform resource identifier (URI) per user (box 5 of figure 1), thus feeding the at least one user with information of any suitable type at the predefined time interval. The URI may include attributes about an individual user or for a group of users.

Further, based on the identification of the personalized profile of the at least one user, the delivery of information may thus comprise targeted information which may be web advertisements. An advantageous effect of such advertisements is that the content feed provider has the possibility of opening direct communication channels with a plurality of users, thus promoting his services beyond his local area and reach an audience without any geographical limitation. Such audience may in the future turn into customers, thus ensuring more profit and brand recognition for the content feed provider.

In other examples, the characteristics of the at least one user may comprise gender and age. In other examples, the characteristics of the at least one user may comprise job title and education level. Examples of attributes may also include, content of websites that the user visited in the recent past, as well as previous queries of the at least one user in search engines. Based on that attributes, the delivery of information may be targeted and thus provide to the at least one user with information that is of his/her interest, thus assisting any entity/content feed provider to target their ad campaigns in a more precise way, maximizing thus the possibilities of successful advertisement, since it is a common drawback that there is a steady decrease in the effectiveness of random on-line advertising. In addition, targeted advertisement provides the advantage of making the campaigns of the content feed provider more effective, since the advertisement is displayed to an audience that is more likely to be interested in what service or product the entity/individual is selling.

In other examples, the method of delivery of information may comprise the identification of the current location of the at least one user, and in a next step the delivery of localized advertising based on the identified current location. The identification of the location may be performed through commonly known in the art techniques such as the user's device IP address that is included in the header of each request of the sender's Internet Protocol packet.

In that way, advertisers, can deliver different messages to the at least one user/participant, depending on where they are. By personalizing the delivery of information to the at least one user based on their location, it is much more likely to show them something relevant. In addition, since location data is served in real time, there is an opportunity for the entities to target the users at precise moments.

In other examples, the method of delivery of information to the at least one user may automatically stop in a pre-determined time. It shall be understood that the disclosed method of delivery of information should not prevent the at least one user from missing any single moment of the web-conference that he is intended to participate. In that sense, the method of delivery of information, may automatically stop in a moment approximately before the initiation of the web-conference (box 7), which may be of about 5-20 seconds before the initiation of the web-conference and more preferably of about 10 seconds before the initiation. Such duration should be sufficient for the user to return mentally to the web-conference environment, without affecting his capability to participate normally in the web-conference. The at least one user is thus redirected to the web-conference environment (box 8).

In other examples, the at least one user may comprise a plurality of users, without deviating from the scope of the present disclosure. Further, upon activation of the individual links and for example, prior to the initiation of the web conference, the method of delivery of information allows the plurality of users to interact, either with the provision of chatting service or through voice activated means. Such chatting services or voice activated means provide the opportunity to the plurality of users to interact with each other and therefore exchange significant information either about the web-conference or about their current status.

In another embodiment, upon activation of the invitation link, the user may not be directed to an external application as shown in box 2 of figure 1, but the method of delivery of information may be implemented in the same space as provided by the venue, without departing from the teachings of the scope of the present disclosure.

It should be noted that the above embodiments are only for illustrating and not limiting the technical solutions of the present invention. Although the present invention has been described in detail with reference to the above embodiments, those skilled in the art should understand that any modifications or equivalent substitutions of the present invention are intended to be included within the scope of the appended claims.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A method of delivery of information from a provider to at least one user via an invitation link at a web-conference environment, comprising the steps of:
- Activation of the invitation link by the at least one user,
- delivery of information to the at least one user
wherein the delivery of information is performed in at least one predefined time interval.

2. The method according to claim 1 wherein the pre-defined time interval is before the initiation or after the ending of a web-conference.

3. The method according to any of claims 1 or 2 further comprising the step of identification of the personalized profile associated with the at least one user.

4. The method according to claim 3 wherein the delivery of information is targeted to the at least one user based on the identification of the personalized profile.

5. The method according to claim 4 wherein the delivery of targeted information comprises web advertisements.

6. The method according to any of claims 1-5 further comprising the step of identifying the current location of the at least one user.

7. The method according to claims 4-6 wherein the targeted information comprises delivery of localized advertising to the at least one user, based on the identified current location of the at least one user.

8. The method according to any of claims 1-7 comprising the step of identifying the characteristics of the at least one user, the characteristics being gender and age.

9. The method according to claim 8, wherein the characteristics further comprise the job title and education level.

10. The method according to claim 8-9, wherein the targeted information comprises web advertisements, based on the identified characteristics.

11. The method according to any of the preceding claims wherein the delivery of information to the at least one user automatically stops in a pre-determined time.

12. The method according to claim 11 wherein the pre-determined time is approximately the initiation of the web-conference.

13. The method according to any of the preceding claim wherein the at least one user comprises a plurality of users and interaction is allowed between the plurality of users.

14. The method according to claim 13 wherein the interaction is performed through voice activated means.

15. The method according to any of the preceding claims wherein the delivery of information to the at least one user comprises streaming video and/or text.
